# FASCICULE DE BREVET EUROPEEN

(11) **EP 2 046 635 B1**
(45) Date de publication et mention de la délivrance du brevet: **02.03.2011**
(21) Numéro de dépôt: 07803802.3
(22) Date de dépôt: 28.06.2007
(51) Int. Cl.: B64C 1/00, B64C 25/04, B64C 25/14

(54) **PARTIE AVANT D'AERONEF AVEC CASE DE RANGEMENT DU TRAIN AVANT**
LUFTFAHRZEUG-VORBAUSTRUKTUR MIT MIT EINEM BUGFAHRWERKSCHACHT
FRONT PART OF AN AIRCRAFT WITH NOSE LANDING GEAR WELL

(30) Priorité: 12.07.2006 FR 0606344
(43) Date de publication de la demande: 15.04.2009
(73) Titulaire: Airbus Operations, 31060 Toulouse (FR)
(72) Inventeur: GUERING, Bernard, F-31850 MONTRABE (FR)
(74) Mandataire: Kurtz, Laurent Charles Edmond
(86) Numéro de dépôt international: PCT/FR2007/001093
(87) Numéro de publication internationale: WO 2008/006956

(56) Documents cités:
- EP-A1- 0 980 822
- FR-A1- 2 667 042
- GB-A- 825 332
- US-A1- 2 982 500
- US-A1- 4 408 736

## Description

L'invention a pour objet une case de rangement pour le train d'atterrissage placé à l'avant du fuselage d'un avion, dans le plan médian longitudinal de celui-ci.

Un avion de transport de passagers ou de fret comporte, habituellement, un fuselage unique reposant sur le sol par un ensemble de trains d'atterrissage repliables, respectivement deux trains latéraux et un train avant qui est centré sur un plan médian longitudinal du fuselage.

Le fuselage est, habituellement, séparé en deux zones par un plancher formant pont principal qui s'étend sur toute sa longueur, respectivement une zone supérieure dans laquelle est disposé un poste de pilotage, placé dans la pointe avant de l'avion, ainsi que la cabine pour les passagers, et une zone inférieure qui forme une soute pour les bagages et des charges diverses, cette soute s'étendant au-dessous du pont principal, sur un plancher inférieur.

Chaque train d'atterrissage est articulé de façon à venir se replier, après le décollage, dans une case de rangement qui est placée habituellement sous les ailes pour les trains latéraux et sous la partie avant du fuselage pour le train central avant. Cette case de rangement est limitée par une structure qui doit être suffisamment résistante pour supporter les efforts appliqués sur le train d'atterrissage et elle est munie de volets s'ouvrant vers le bas sur la partie inférieure du fuselage pour déplier et replier le train d'atterrissage en se refermant après le décollage pour reconstituer la forme aérodynamique souhaitée. Elle forme également la limite entre une zone pressurisée à l'intérieur de l'aéronef et un espace non pressurisé recevant le train d'atterrissage et doit donc être étanche et capable de résister à la différence de pression entre l'espace pressurisé et l'intérieur de la case de train avant qui n'est pas pressurisé.

L'espace autour de la case de train avant, disposé en-dessous du pont principal sert généralement de logement pour divers organes de l'avion. Cet espace est cependant difficilement exploitable du fait de sa forme complexe et un volume important est généralement perdu.

Un tel avion est connu du GB-825332, qui montre toutes les caractéristiques techniques du préambule de la revendication 1.

L'invention a pour objet une nouvelle configuration de la pointe avant du fuselage permettant d'en optimiser l'agencement grâce à une disposition particulière du train d'atterrissage avant et de la case de rangement de celui-ci.

A cet effet, l'invention propose une case de rangement de train d'atterrissage avant pour un avion comportant un ensemble de trains d'atterrissage repliables comportant un train avant centré sur un plan médian longitudinal du fuselage, cette case de rangement formant une cloison étanche entre une zone pressurisée et le logement du train avant dans sa position repliée.

Selon l'invention, cette case de rangement présente une face supérieure renforcée comportant une zone sensiblement plane, et sensiblement horizontale lorsque l'avion est au sol, de manière à former un plancher d'un local pressurisé de l'avion.

Grâce à cette conception innovante, il est inutile de prévoir une case renforcée et un plancher distinct au-dessus de la case. La partie supérieure de la case sert alors de plancher. Les organes placés habituellement autour de la case de rangement de train avant peuvent alors prendre place par exemple au-dessus du plancher formé par la partie supérieure de cette case. L'espace ainsi dégagé est bien plus facile à exploiter que l'espace habituel situé aux alentours d'une case de train avant.

Dans une variante de réalisation, la face supérieure présente par exemple aussi une seconde zone sensiblement plane, sensiblement parallèle à la première zone plane, à un niveau inférieur. Les deux zones planes sont alors par exemple reliées par un escalier intégré dans la face supérieure renforcée de la case de rangement.

La présente invention, telle que définie par la revendication 1, concerne une partie avant d'aéronef comportant un fuselage, un poste de pilotage disposé à l'avant du fuselage et présentant un plancher, ainsi qu'un train avant d'atterrissage et une case de rangement de train d'atterrissage avant, **caractérisée en ce que** la case de rangement de train d'atterrissage avant est une case de rangement telle que décrite plus haut.

Dans une telle partie avant d'aéronef, la face supérieure de la case de rangement de train d'atterrissage avant forme avantageusement une partie au moins du plancher du poste de pilotage. Il est alors inutile de prévoir une structure renforcée pour la case de train d'atterrissage avant et une structure renforcée formant le plancher du poste de pilotage. Ceci permet d'alléger sensiblement la partie avant de l'aéronef.

Dans cette partie avant d'aéronef, un couloir d'accès au poste de pilotage peut être prévu, ce couloir d'accès présentant un plancher, et ce plancher est avantageusement constitué en partie au moins par la face supérieure de la case de rangement de train d'atterrissage avant. Le plancher du poste de pilotage et le plancher du couloir d'accès peuvent être à des altitudes différentes, et au moins une marche d'escalier intégrée à la face supérieure de la case de train d'atterrissage avant relie alors les deux planchers.

Une forme de réalisation de l'invention prévoit que le train d'atterrissage avant comporte un essieu monté à l'extrémité d'un bras rigide articulé autour d'un axe transversal dans la partie arrière de la case de rangement de train avant et est actionné par un mécanisme articulé autour d'un axe placé à l'arrière du train d'atterrissage avant. Dans cette forme de réalisation, le mécanisme d'actionnement comporte par exemple un vérin de longueur variable, formant une contrefiche de poussée ayant une extrémité avant articulée sur le bras et une extrémité arrière articulée autour de l'axe transversal.

Le plancher du poste de pilotage comporte deux parties renflées placées respectivement en arrière de sièges destinés à accueillir un pilote et un copilote, dans lesquelles viennent se placer les roues du train avant en position rentrée.

Une partie avant d'aéronef selon l'invention peut aussi comporter un carénage en forme de bulbe, ménagé au dessous du fuselage, et ayant une partie avant large dans laquelle viennent se placer les roues et prolongée vers l'arrière par une partie effilée se raccordant progressivement au fuselage.

Selon une autre variante de réalisation, en arrière du poste de pilotage se trouve un local technique dans lequel sont placés des organes de systèmes de l'aéronef.

Enfin, la présente invention concerne un aéronef, caractérisé en ce qu'il présente une partie avant telle que décrite ci-dessus.

L'invention couvre également d'autres caractéristiques avantageuses qui apparaîtront dans la description suivante d'un mode de réalisation particulier, donné à titre d'exemple non limitatif et représenté sur les dessins annexés.
La figure 1 est une vue partielle, en coupe longitudinale, de la pointe avant d'un avion ayant une case de rangement de train avant selon l'invention.
La figure 2 est une vue de détail, en coupe longitudinale, du train avant et de sa case de rangement.
La figure 3 est une vue de côté de l'avion selon la figure 1.
La figure 4 est une vue de face de l'avion.
La figure 5 est une vue de dessous de l'avion.

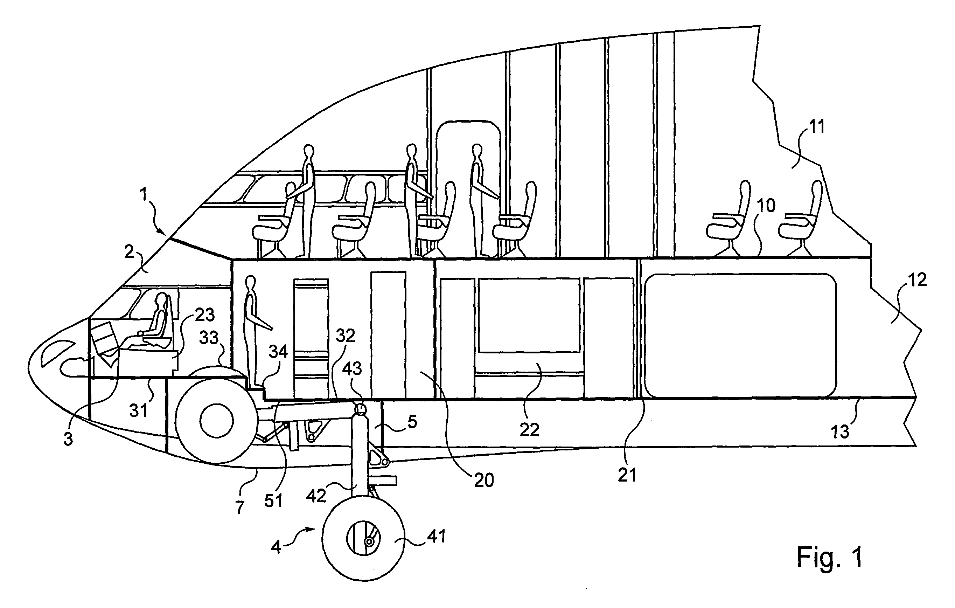

La figure 1 montre, en coupe longitudinale, la partie avant du fuselage 1 d'un avion, séparé en deux zones par un plancher 10 formant un pont principal, respectivement une zone supérieure 11, pressurisée et climatisée, qui forme la cabine-passagers, et une zone inférieure 12 pressurisée qui constitue une soute ménagée sur un pont inférieur 13.

Selon une disposition particulière qui sera décrite plus en détail par la suite, le poste de pilotage 2 est disposé à l'avant d'un espace pressurisé 20 disposé au-dessous du pont principal 10 et séparé de la soute 12, vers l'arrière, par une paroi transversale 21 étanche et ayant une structure suffisamment résistante pour former une paroi « anti-crash » résistant à des chocs éventuels venant de la soute 12.

L'espace pressurisé 20 est ménagé sur un plancher 3 qui comporte une partie avant surélevée 31 sur laquelle se trouve le poste de pilotage 2 et une partie arrière 32 placée à un niveau moins élevé, de préférence dans le prolongement du pont inférieur 13 sur lequel est ménagée la soute 12.

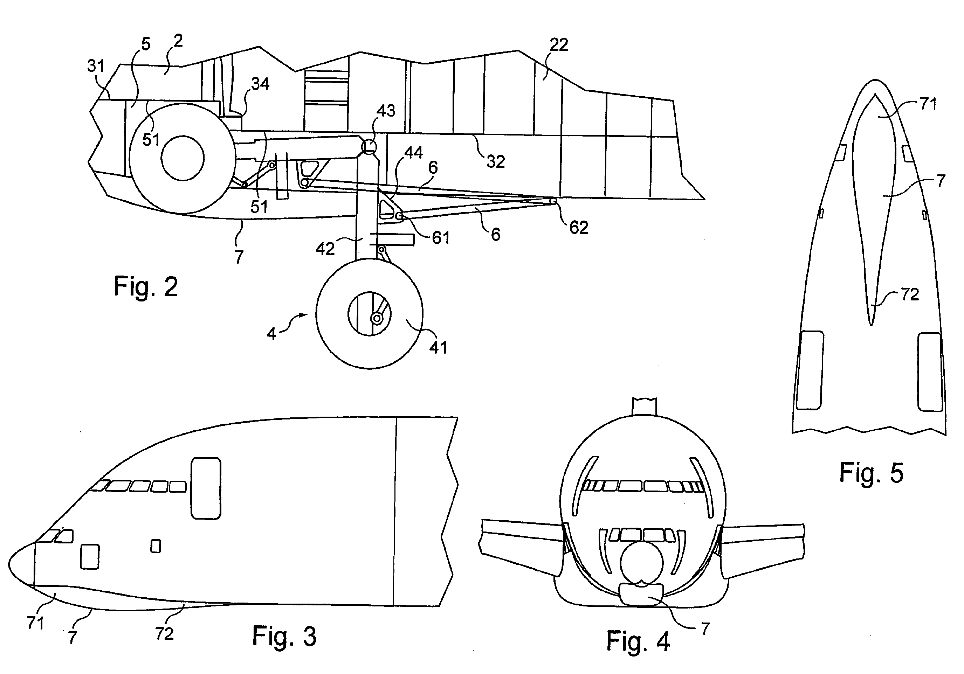

Comme habituellement, l'avion repose sur deux trains d'atterrissage latéraux, non représentés sur les figures, et un train avant central 4 actionné par un mécanisme représenté sur la figure 2, de façon à venir se replier dans une case de rangement 5 disposée dans la partie inférieure de la pointe avant du fuselage 1.

D'une façon générale, le train avant 4 comporte un essieu avec deux ensembles de roues 41 disposés de part et d'autre de l'extrémité d'un bras de support 42 qui est articulé, à son autre extrémité, autour d'un axe transversal 43 de façon à pouvoir pivoter entre la position d'atterrissage pour laquelle le bras 42 est sensiblement vertical et la positon repliée dans la case de rangement 5, pour laquelle le bras 42 est sensiblement horizontal.

A cet effet, le déplacement du bras 42 est commandé par un mécanisme comportant essentiellement une contrefiche de poussée 6 constituée d'un ou plusieurs vérins télescopiques s'étendant vers l'arrière et ayant une extrémité avant articulée autour d'un axe 61 sur une partie d'appui 44 du bras 42 et une extrémité arrière articulée sur le fuselage autour d'un axe 62.

Bien entendu, l'ensemble du mécanisme doit être capable de supporter des efforts extrêmement importants, en particulier à l'atterrissage. La case de rangement 5 ménagée dans la partie inférieure du fuselage doit donc avoir une structure suffisamment résistante pour résister aux efforts encaissés, en particulier au niveau des paliers sur lesquels sont montés les axes d'articulation 43 du bras de support 42 et 62 de la contrefiche de poussée 6.

Selon l'invention, la case de rangement 5 est placée directement au-dessous du plancher 3 du poste de pilotage 2. La partie arrière 32 du plancher constitue en partie la paroi supérieure 51 de la structure de la case de rangement 5 tandis que le reste de la paroi supérieure 51 de la structure de la case de rangement forme une partie de la partie avant 31 du plancher 3 ainsi qu'un escalier 34 reliant la partie avant 31 à la partie arrière 32.

Par ailleurs, selon une variante de l'invention, du fait que la case de rangement 5 est placée directement au-dessous du plancher du poste de pilotage 2, des appareillages, en particulier électroniques, rassemblés au sein d'une baie avionique, sont placés dans un local technique 22 disposé dans l'espace pressurisé 20, à l'arrière du poste de pilotage 2.

Ainsi, tous ces appareillages restent accessibles en vol.

La case de rangement 5 étant ainsi intégrée dans le fuselage au-dessous du poste de pilotage 2, il est possible que sa hauteur soit insuffisante pour y replier l'ensemble du train, et en particulier les roues.

Le plancher 31 du poste de pilotage comporte deux parties renflées 33 ménagées respectivement derrière deux fauteuils 23 des pilotes et dans lesquels viennent se placer une partie des deux ensembles de roues 41 en position rentrée.

En outre, la case de rangement 5 représentée sur les figures comporte dans sa partie inférieure un carénage 7 ayant une forme de bulbe représentée sur les figures 3, 4 et 5, avec une partie avant large 71 dans laquelle viennent se placer les roues 41 et une partie arrière effilée 72 qui, dans sa partie médiane, englobe l'axe d'articulation 62 de la contrefiche 6 et se termine en pointe pour se raccorder au fuselage.

Les proportions relatives entre la partie de la case de rangement 5 intégrée au fuselage 1 et sa partie inférieure au niveau du carénage 7 sont déterminées de façon que le volume du carénage 7 en bulbe constitue un compromis entre l'exigence de confort de l'équipage qui impose une hauteur maximale pour la partie avant 31 du plancher 3 du poste de pilotage et une hauteur maximale du carénage 7 pour conserver une traînée aérodynamique acceptable.

Bien entendu, le carénage 7 est constitué par au moins deux volets qui s'ouvrent pour permettre la manoeuvre du train d'atterrissage et se referment en vol.

La case de rangement 5 du train avant 4 selon l'invention peut être adoptée sur des avions avec une configuration classique dans laquelle le poste de pilotage se trouve au même niveau qu'une cabine-passagers sur un pont principal et à l'avant de cette cabine-passagers. Toutefois, l'invention est bien adaptée à un configuration dans laquelle le poste de pilotage est placé dans la partie basse du fuselage. Dans ce mode de réalisation particulier représenté sur la figure 1, le poste de pilotage 2 est placé à l'avant de l'espace pressurisé 20 qui s'étend vers l'arrière, au dessous du pont principal 10 et se trouve donc au même niveau que la soute 12. La cabine-passagers peut alors s'étendre jusqu'à l'extrémité avant du pont principal 10. A cette extrémité, des passagers peuvent alors prendre place à l'endroit habituellement occupé par les pilotes.

L'espace pressurisé 20, isolé de la cabine-passagers placée dans la zone supérieure 11, peut être réservé à l'équipage et comporte par exemple aussi, outre le local technique 22 évoqué plus haut, un local de détente pour l'équipage. Ce local de détente est avantageusement traversé par un couloir longitudinal central. Le plancher de ce couloir longitudinal correspond alors à la face supérieure de la case de rangement de train d'atterrissage avant. La face supérieure de cette case sert alors ici de plancher, au moins en partie, pour le poste de pilotage, et de plancher pour le couloir longitudinal d'accès au poste de pilotage et au local de détente de l'équipage. Ce local comporte par exemple un salon muni d'une couchette de chaque côté du couloir ainsi qu'au moins une toilette et éventuellement une douche.

Cependant, l'invention ne se limite évidemment pas aux détails de ce mode de réalisation mais couvre également les variantes utilisant des moyens équivalents.

## Revendications

1. Partie avant d'aéronef comportant un fuselage, un poste de pilotage disposé à l'avant du fuselage et présentant un plancher, ainsi qu'un train avant d'atterrissage centré sur un plan médian longitudinal du fuselage et une case de rangement de train d'atterrissage avant formant une cloison étanche entre une zone pressurisée et le logement du train avant dans sa position repliée, **caractérisée en ce que** la case de rangement de train d'atterrissage avant présente une face supérieure renforcée comportant une zone sensiblement plane et sensiblement horizontale lorsque l'avion est au sol, de manière à former un plancher d'un local pressurisé de l'avion, et **en ce que** le plancher (3) du poste de pilotage (2) comporte deux parties renflées (33) placées respectivement en arrière des sièges destinés à accueillir un pilote et un copilote (23), dans lesquels viennent se placer les roues (41) du train avant (4) en position rentrée.

2. Partie avant d'aéronef selon la revendication 1, **caractérisée en ce que** la face supérieure de la case de rangement de train d'atterrissage avant présente une zone sensiblement plane, sensiblement parallèle à la première zone plane, à un niveau inférieur.

3. Partie avant d'aéronef selon la revendication 2, **caractérisée en ce que** les deux zones planes sont reliées par un escalier (34) intégré dans la face supérieure renforcée de la case de rangement.

4. Partie avant d'aéronef selon l'une des revendications 1 à 3. **caractérisée en ce que** la face supérieure (51) de la case de rangement de la case de rangement de train d'atterrissage avant forme une partie au moins du plancher (31) du poste de pilotage (2).

5. Partie avant d'aéronef selon la revendication 4, **caractérisée en ce qu'**elle comporte un couloir d'accès au poste de pilotage (2) **en ce que** ce couloir d'accès présente un plancher, et **en ce que** ce plancher est constitué en partie au moins par la face supérieure (51) de la case de rangement de train d'atterrissage avant.

6. Partie avant d'aéronef selon la revendication 5, **caractérisée en ce que** le plancher (31) du poste de pilotage (2) et le plancher du couloir d'accès sont à des altitudes différentes, et **en ce qu'**au moins une marche d'escalier intégrée à la face supérieure de la case de train d'atterrissage avant relie les deux planchers.

7. Partie avant d'aéronef selon l'une des revendications 1 à 6, **caractérisée en ce que** le train d'atterrissage avant (4) comporte un essieu monté à l'extrémité d'un bras (42) rigide articulé monté autour d'un axe transversal (43) dans la partie arrière de la case de rangement de train avant et est actionné par un mécanisme (6) articulé autour d'un axe (62) placé à l'arrière du train d'atterrissage avant.

8. Partie avant d'aéronef selon la revendication 7, **caractérisée en ce que** le mécanisme d'actionnement comporte un vérin (6) de longueur variable, formant une contrefiche de poussée ayant une extrémité avant (61) articulée sur le bras (42) et une extrémité arrière articulée autour de l'axe transversal (62).

9. Partie avant d'aéronef selon l'une des revendications 1 à 8. **caractérisée par le fait qu'**elle comporte un carénage (7) en forme de bulbe, ménagé au-dessous du fuselage, et ayant une partie avant large (71) dans laquelle viennent se placer les roues et prolongée vers l'arrière par une partie effilée (72) se raccordant progressivement au fuselage.

10. Partie avant d'aéronef selon l'une des revendications 1 à 9, **caractérisée par le fait qu'**en arrière du poste de pilotage se trouve un local technique (22) dans lequel sont placés des organes de systèmes de l'aéronef.

11. Aéronef, **caractérisé en ce qu'**il présente une partie avant selon l'une des revendications 1 à 10.

## Claims

1. A front part of an aircraft comprising a fuselage, a cockpit disposed at the front of the fuselage and having a floor, as well as a front undercarriage centered on a longitudinal median plane of the fuselage and a front undercarriage stowage bay forming a fluid-tight partition between a pressurized zone and the housing of the front undercarriage in its retracted position, **characterized in that** the front undercarriage stowage bay has an upper reinforced face comprising a zone that is substantially planar and substantially horizontal when the aircraft is on the ground, so as to form a floor of a pressurized area of the aircraft, and **in that** the floor (3) of the cockpit (2) comprises two bulging parts (33) placed respectively behind the seats adapted to receive a pilot and a co-pilot (23), in which the wheels (41) of the front undercarriage (4) come to be placed in drawn in position.

2. A front part of an aircraft according to claim 1, **characterized in that** the upper face of the front undercarriage stowage bay has a substantially flat zone, substantially parallel to the first flat zone, at a lower level.

3. A front part of an aircraft according to claim 2, **characterized in that** the two flat zones are connected by a stairway (34) integrated into the reinforced upper face of the stowage bay.

4. A front part of an aircraft according to one of claims 1 to 3, **characterized in that** the upper face (51) of the front undercarriage stowage bay forms at least a part of the floor (31) of the cockpit (2).

5. A front part of an aircraft according to claim 4, **characterized in that** it comprises an access corridor for access to the cockpit (2) **in that** the access corridor has a floor, and **in that** the floor is constituted at least partly by the upper face (51) of the front undercarriage stowage bay.

6. A front part of an aircraft according to claim 5, **characterized in that** the floor (31) of the cockpit (2) and the floor of the access corridor are at different heights, and **in that** at least one stairway step integrated into the upper face of the front undercarriage bay links the two floors,

7. A front part of an aircraft according to one of claims 1 to 6, **characterized in that** the front undercarriage (4) comprises an axle mounted at the end of an articulated rigid arm (42) mounted about a transverse shaft (43) in the rear part of the front undercarriage stowage bay and is actuated by a mechanism (6) articulated about a shaft (62) placed behind the front undercarriage.

8. A front part of an aircraft according to claim 7, **characterized in that** the actuating mechanism comprises a jack (6) of variable length, forming a bracing strut having a front end (61) articulated on the arm (42) and a rear end articulated about the transverse shaft (62).

9. A front part of an aircraft according to one of claims 1 to 8, **characterized by** the fact thatit comprises a bulb-shaped fairing (7), provided below the fuselage, and having a wide front part (71) in which the wheels come to be placed and which is continued rearwards by a tapered part (72) progressively joining to the fuselage.

10. A front part of an aircraft according to one of claims 1 to 9, **characterized by** the fact thatan equipment area (22) Is situated behind the cockpit in which devices of systems of the aircraft are placed.

11. An aircraft, **characterized in that** it comprises a front part according to one of claims 1 to 10.

## Patentansprüche

1. Luftfahrzeug-Vorderteil, umfassend einen Rumpf, ein Cockpit, das im vorderen Teil des Rumpfs angeordnet ist und einen Boden umfasst, sowie ein Bugfahrwerk, das auf einer Längsmittelebene des Rumpfs zentriert ist, und einen Bugfahrwerkschacht, der eine dichte Trennwand zwischen einer Druckzone und der Aufnahme für das Bugfahrwerk in seiner zusammengeklappten Stellung bildet, **dadurch gekennzeichnet, dass** der Bugfahrwerkschacht eine verstärkte Oberseite aufweist, die eine im Wesentlichen ebene und im Wesentlichen horizontale Zone umfasst, wenn das Flugzeug am Boden ist, so dass ein Boden eines Druckraums des Flugzeugs gebildet wird, und dass der Boden (3) des Cockpits (2) zwei ausgebauchte Teile (33) umfasst, die jeweils hinter den zur Aufnahme eines Piloten und eines Kopiloten (23) bestimmten Sitzen angeordnet sind und in die die Räder (41) des Bugfahrwerks (4) in eingefahrener Stellung eintreten.

2. Luftfahrzeug-Vorderteil nach Anspruch 1, **dadurch gekennzeichnet, dass** die Oberseite des Bugfahrwerkschachts eine im Wesentlichen ebene, zur ersten ebenen Zone im Wesentlichen parallele Zone in einer niedrigeren Höhe aufweist.

3. Luftfahrzeug-Vorderteil nach Anspruch 2, **dadurch gekennzeichnet, dass** die beiden ebenen Zonen durch eine Treppe (34) verbunden sind, die in die verstärkte Oberseite des Schachts integriert ist.

4. Luftfahrzeug-Vorderteil nach einem der Ansprüche 1 bis 3, **dadurch gekennzeichnet, dass** die Oberseite (51) des Bugfahrwerkschachts mindestens einen Teil des Bodens (31) des Cockpits (2) bildet.

5. Luftfahrzeug-Vorderteil nach Anspruch 4, **dadurch gekennzeichnet, dass** es einen Gang für den Zugang zum Cockpit (2) umfasst, dass dieser Zugangsgang einen Boden aufweist und dass dieser Boden mindestens zum Teil aus der Oberseite (51) des Bugfahrwerkschachts besteht.

6. Luftfahrzeug-Vorderteil nach Anspruch 5, **dadurch gekennzeichnet, dass** der Boden (31) des Cockpits (2) und der Boden des Zugangsgangs in verschiedenen Höhen liegen und dass mindestens eine Treppenstufe, die in die Oberseite des Bugfahrwerkschachts integriert ist, die beiden Böden verbindet.

7. Luftfahrzeug-Vorderteil nach einem der Ansprüche 1 bis 6, **dadurch gekennzeichnet, dass** das Bugfahrwerk (4) eine Radachse umfasst, die am Ende eines starren Arms (42) montiert ist, der an einer Querachse (43) im hinteren Teil des Bugfahrwerkschachts angelenkt ist, und durch einen Mechanismus (6) betätigt wird, der an einer Achse (62) angelenkt ist, die hinter dem Bugfahrwerk angeordnet ist.

8. Luftfahrzeug-Vorderteil nach Anspruch 7, **dadurch gekennzeichnet, dass** der Betätigungsmechanismus eine Kolben-Zylinder-Einheit (6) veränderlicher Länge umfasst, die eine Schubstrebe bildet, die ein vorderes Ende (61), das an dem Arm (42) angelenkt ist, und ein hinteres Ende besitzt, das an der Querachse (62) angelenkt ist.

9. Luftfahrzeug-Vorderteil nach einem der Ansprüche 1 bis 8, **dadurch gekennzeichnet, dass** er eine wulstförmige Verkleidung (7) umfasst, die unter dem Rumpf angeordnet ist und einen breiten vorderen Teil (71) besitzt, in den die Räder eintreten und der nach hinten durch einen schlanken Teil (72) verlängert ist, der progressiv an den Rumpf anschließt.

10. Luftfahrzeug-Vorderteil nach einem der Ansprüche 1 bis 9, **dadurch gekennzeichnet, dass** sich hinter dem Cockpit ein technischer Raum (22) befindet, in dem Organe von Systemen des Luftfahrzeugs angeordnet sind.

11. Luftfahrzeug, **dadurch gekennzeichnet, dass** es einen Vorderteil nach einem der Ansprüche 1 bis 10 aufweist.
